# EUROPEAN PATENT APPLICATION

(11) **EP 4 397 957 A1**
(43) Date of publication of application: **10.07.2024**
(21) Application number: 22862881.4
(22) Date of filing: 06.07.2022
(51) Int. Cl.: G01N 15/14

(54) **WIDE-TEMPERATURE NANOPARTICLE COUNTER**

(30) Priority: 31.08.2021 CN 202111011288
(71) Applicant: Beihang University, Beijing 100191 (CN); Hangzhou Innovation Institute, Beihang University, Hangzhou, Zhejiang 310051 (CN)
(72) Inventor: CHEN, Longfei, Hangzhou, Zhejiang 310051 (CN); XU, Zheng, Hangzhou, Zhejiang 310051 (CN); CHEN, Cheng, Hangzhou, Zhejiang 310051 (CN); MA, Xiao, Hangzhou, Zhejiang 310051 (CN); CUI, Boxuan, Hangzhou, Zhejiang 310051 (CN); SHEN, Qifeng, Hangzhou, Zhejiang 310051 (CN); LI, Guangze, Hangzhou, Zhejiang 310051 (CN); SUN, Qiwen, Hangzhou, Zhejiang 310051 (CN)
(74) Representative: Schneiders & Behrendt Bochum
(86) International application number: PCT/CN2022/104014
(87) International publication number: WO 2023/029740

(57) **Abstract**

Disclosed is a wide-temperature nanoparticle counter, which includes a gas intake flow-dividing structure, a saturator, a condenser, and an optical counter. The saturator, the condenser, and the optical counter are sequentially connected. The saturator, the condenser, and the optical counter each are provided with a temperature control unit; and a liquid working substance with a thermal diffusivity greater than the mass diffusivity is stored in the saturator. A to-be-tested gas is divided into two paths by the gas intake flow-dividing structure, where one path of gas enters the saturator after being filtered, and then carries working substance steam to enter the condenser; and the other path of gas enters the condenser from a center of a bottom of the condenser through a capillary or a microporous channel, and is mixed with the gas carrying the working substance steam. A working substance is chosen from a group consisting of alcohols, silicone oil, esters, and a solution formed by mixing at least two of the silicone oil, esters and alcohols. Different liquid working substances are selected based on the temperature of different sample gases to be tested, thereby enabling effective measurement of the number concentration of nanoparticles across a wide-temperature range.

## Description

### CROSS-REFERENCE TO RELATED APPLICATION

This patent application claims the priority of Chinese Patent Application No. 202111011288.9 filed with the China National Intellectual Property Administration on Aug 31, 2021, and entitled "Wide-temperature nanoparticle counter", the entire content of which is incorporated by reference in the present application.

### TECHNICAL FIELD

The present disclosure relates to the field of particle counting, in particular to a wide-temperature nanoparticle counter.

### BACKGROUND

Currently, the frequent occurrence of haze days has raised public concern regarding atmospheric particulate pollutants. Numerous studies indicate that smaller particles penetrate the human body more readily, with nanoparticles capable of directly accessing the alveoli and potentially infiltrating the brain via the bloodstream, causing irreversible damage. Furthermore, emission regulations for motor vehicles and aircraft engines also restrict the concentration of nanoparticles in exhaust gases. Thus, the metering of fine particles plays a fundamental role in research on atmospheric contamination and meeting the latest emission regulations. The sources of atmospheric pollutants are numerous, and their temperatures are distributed from room temperature to high temperature. Existing particle metering devices fail to meet the current demand for measuring the number of nanoparticles in a wide temperature range.

### SUMMARY

An objective of the present disclosure is to provide a wide-temperature nanoparticle counter.

To achieve the objective above, the present disclosure employs the following technical solution:

The wide-temperature nanoparticle counter includes a gas intake flow-dividing structure, a saturator, a condenser, and an optical counter. The saturator, the condenser and the optical counter are in sequential connection with each other. Each of the saturator, the condenser, and the optical counter is provided with a temperature control unit, with the saturator maintained at a higher temperature than the condenser. A liquid working substance with a thermal diffusivity greater than a mass diffusivity is stored in the saturator. The gas intake flow-dividing structure includes a pretreatment pipeline and a to-be-tested gas conveying pipeline. Upon entry into the wide-temperature nanoparticle counter from a to-be-tested gas input end of the wide-temperature nanoparticle counter, the to-be-tested gas bifurcates into two paths: one path of gas flows into the pretreatment pipeline, while the other path of gas flows into the to-be-tested gas conveying pipeline. The gas from the pretreatment pipeline enters the saturator after being filtered and carries working substance steam into the condenser. The gas in the to-be-tested gas conveying pipeline enters the condenser from a center of a bottom of the condenser through a capillary or a microporous channel at an end of the to-be-tested gas conveying pipeline. If an operating temperature of the saturator falls below a predetermined temperature threshold, alcohols are chosen as the working substance; if the operating temperature of the saturator remains above the predetermined temperature threshold, the working substance is selected from silicone oil, esters, or a solution formed by mixing at least two of the silicone oil, esters and alcohols.

In the embodiment, the pretreatment pipeline is equipped with a flow control module, a particle filter, and a flowmeter. The flow control module is configured to regulate a flow rate of the gas flowing into the saturator, the particle filter is configured to remove particulate matters in the gas in the pretreatment pipeline, and the flowmeter is configured to measure a flow rate of the gas in the pretreatment pipeline. The gas output from the pretreatment pipeline, after entering the saturator, flows above a liquid working substance and carries the working substance steam to enter the condenser from an output end of the saturator.

In the embodiment, the optical counter includes: a scattered light collecting device, an aerosol particle collimating structure, and a laser device.

The scattered light collecting device is equipped with an aerosol particle inlet, an aerosol particle outlet, and a laser irradiation inlet.

The aerosol particle collimating structure is configured to linearly convey aerosol particles entering from the aerosol particle inlet to the aerosol particle outlet.

Laser emitted by a laser device enters the scattered light collecting device via the laser irradiation inlet, and the laser irradiates on a motion path of the aerosol particles.

In the embodiment, the optical counter further includes an aerosol particle inlet nozzle, the aerosol particle collimating structure includes an annular sheath gas nozzle, and the annular sheath gas nozzle includes a nozzle part and a pipeline part.

The nozzle part includes a nozzle cavity, which has a nozzle cavity outlet connected to the aerosol particle inlet, and is sleeved outside the aerosol particle inlet nozzle. An annular gap is formed between the nozzle cavity and an outer wall of the aerosol particle inlet nozzle. A cross section of the annular gap at an outlet of the aerosol particle inlet nozzle is symmetric about a center of the cross section of the outlet of the aerosol particle inlet nozzle, and a gas flow ejected from the annular gap converges on a straight line from the aerosol particle inlet to the aerosol particle outlet.

The pipeline part includes multiple gas flow pipelines, which are connected to gas flow inlets uniformly formed in a side wall of the nozzle cavity.

In the embodiment, an output port of the aerosol particle inlet nozzle is a millimeter-level or submillimeter-level necking.

In the embodiment, a connecting line between the aerosol particle inlet and the aerosol particle outlet is a straight line. The aerosol particle collimating structure includes multiple gas flow inlets formed in a wall of the scattered light collecting device around the aerosol particle inlet. The gas flow inlets are uniformly arranged on a circumference with an intersection of the straight line and the scattered light collecting device as a center, and the gas flow inlets are configured to blow gas symmetrically to the straight line.

In the embodiment, the optical counter further includes a processor. The processor includes a light intensity pulse counting module, a particle size comparison counting module, and an inversion particle size algorithm module. The light intensity pulse counting module is configured to acquire an optical pulse signal output by a photoelectric sensor and count a light intensity distribution of the optical pulse signal, so as to obtain information of a number of particles. The particle size comparison counting module is configured to determine particle size of each particle with reference to a reference optical pulse signal intensity based on a correspondence relation between light intensities of optical pulse signals and particle sizes. The inversion particle size algorithm module is configured to analyze a specific particle size distribution according to an inversion algorithm based on the optical pulse signal distribution.

In the embodiment, the wide-temperature nanoparticle counter further includes a two-stage dilution system, with its output end connected to the to-be-tested gas input end. The two-stage dilution system includes a primary dilution pipeline, and a secondary dilution pipeline.

The primary dilution pipeline includes a first input pipeline, a second input pipeline, a first gas mixing module, a first flow recording and regulation module, and a second flow recording and regulation module. The first input pipeline communicates with the to-be-tested gas, while the second input pipeline communicates with a pure gas. Both an output end of the first input pipeline and an output end of the second input pipeline are connected to an input end of the first gas mixing module. The first flow recording and regulation module is configured to regulate a flow rate of the to-be-tested gas, and the second flow recording and regulation module is configured to regulate a flow rate of the pure gas.

The secondary dilution pipeline includes a first branch, a second branch, a second gas mixing module, and a third flow recording and regulation module installed on the first branch or the second branch. A purification and filtering module is installed on the first branch. Both an input end of the first branch and an input end of the second branch are connected to an output end of the first gas mixing module. Both an output end of the first branch and an output of the second branch are connected to an input end of the second gas mixing module, and an output end of the second gas mixing module is connected to an output end of a particulate matter dilution system.

In the embodiment, the two-stage dilution system further includes a sampling pipeline connected to an output end of the two-stage dilution system. Within the sampling pipeline, a sampling filter membrane is installed to enable the collection of attached particle samples from the sampling filter membrane for subsequent offline analysis.

In specific embodiments of this disclosure, the following technical effects are presented: according to the wide-temperature nanoparticle counter provided by the present disclosure, and combined with, the counting measurement of the particles at a wide-range operating temperature is achieved by selecting different liquid working substances at different measurement temperatures and combined with the temperature control of the saturator and condenser. By adopting the wide-temperature nanoparticle counter provided by the present disclosure, appropriate liquid working substance and appropriate temperature of the saturator and condenser can be selected according to the temperature of the to-be-tested gas, thus achieving the accurate counting of fine particles in the to-be-tested gas.

### BRIEF DESCRIPTION OF THE DRAWINGS

To elucidate the technical solutions in the embodiments of the present disclosure or in the prior art, the subsequent text provides a brief introduction to the accompanying drawings required for describing the embodiments. Evidently, the accompanying drawings in the following description depict only a few embodiments of the present disclosure. Nonetheless, individuals with ordinary skill in the art can derive additional drawings from these accompanying drawings without creative efforts.
FIG. 1 is a structural schematic diagram of a saturator for a wide-temperature nanoparticle counter according to an embodiment of the present disclosure;
FIG. 2 is structural schematic diagram of an another saturator for a wide-temperature nanoparticle counter according to an embodiment of the present disclosure;
FIG. 3 is a schematic diagram of a partial structure of an optical counter according to an embodiment of the present disclosure;
FIG. 4 is a structural schematic diagram of an aerosol particle inlet nozzle according to an embodiment of the present disclosure;
FIG. 5 is a structural schematic diagram of an annular sheath gas nozzle according to an embodiment of the present disclosure;
FIG. 6 is a three-dimensional diagram of an annular sheath gas nozzle according to an embodiment of the present disclosure;
FIG. 7 is a sectional diagram of an annular sheath gas nozzle and an aerosol particle inlet nozzle according to an embodiment of the present disclosure after being assembled;
FIG. 8 is another sectional diagram of an annular sheath gas nozzle and an aerosol particle inlet nozzle according to an embodiment of the present disclosure after being assembled;
FIG. 9 is a schematic diagram of an outlet after an annular sheath gas nozzle and an aerosol particle inlet nozzle are assembled according to an embodiment of the present disclosure;
FIG. 10 is a structural schematic diagram of an optical counter according to an embodiment of the present disclosure;
FIG. 11 is a compression schematic diagram of a cross section of a laser light source according to an embodiment of the present disclosure;
FIG. 12 is a schematic diagram of a counting principle before and after a light spot is compressed according to an embodiment of the present disclosure;
FIG. 13 is a schematic diagram of an installation mode of a photoelectric sensor according to an embodiment of the present disclosure;
FIG. 14 is a schematic diagram of the first structure of an aerosol particulate matter dilution system according to an embodiment of the present disclosure;
FIG. 15 is a schematic diagram of the second structure of an aerosol particulate matter dilution system according to an embodiment of the present disclosure;
FIG. 16 is a schematic diagram of the third structure of an aerosol particulate matter dilution system according to an embodiment of the present disclosure; and
FIG. 17 is a schematic diagram of the fourth structure of an aerosol particulate matter dilution system according to an embodiment of the present disclosure.

1-saturation chamber body; 2-working substance; 3-pipeline channel; 4-pretreatment pipeline; 5-particle filter; 6-flowmeter; 7-heating component; 8-flow control module; 9-gas intake channel; 10-thermal insulation panel; 11-to-be-tested gas conveying pipeline; 12-condenser; 13-gas outlet channel; 14-first channel; 15-second channel; 16-integrating sphere; 17-aerosol particle outlet; 18-lens assembly; 19-laser device; 20-laser irradiation inlet; 21-aerosol particle inlet nozzle; 22-aerosol particle inlet; 23-light trap; 24-gas flow pipeline; 25-gas flow inlet; 26-nozzle cavity; 27-nozzle cavity outlet; 28-annular gap; 29-gas flow inlet; 30-hollow straight tube; 31-through hole; 32-cylindrical lens; 33-primary dilution pipeline; 34-secondary dilution pipeline; 35-pneumatic drive module; 36-filter module; 37-first temperature regulation module; 38-second temperature regulation module; 331-first input pipeline; 332-first flow recording and regulation module; 333-second flow recording and regulation module; 334-second input pipeline; 335-first gas mixing module; 341-first branch; 342-second branch; 343-purification and filtering module; 344-third flow recording and regulation module; 345-second gas mixing module; 351-fourth flow recording and regulation module; 352-gas pump; 361-first particle filter; 371-first temperature collector; 372-heater; 373-first proportional integral derivative (PID) temperature controller; 381-reheater; 382-second temperature collector; 383-second PID temperature controller.

### DETAILED DESCRIPTION OF THE EMBODIMENTS

The following clearly and completely describes the technical solutions in the embodiments of the present disclosure with reference to the accompanying drawings in the embodiments of the present disclosure. Evidently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

In order to make the objectives, technical solutions and advantages of the present disclosure more clearly, the present disclosure is further described in detail below with reference to the embodiments.

### Embodiment 1

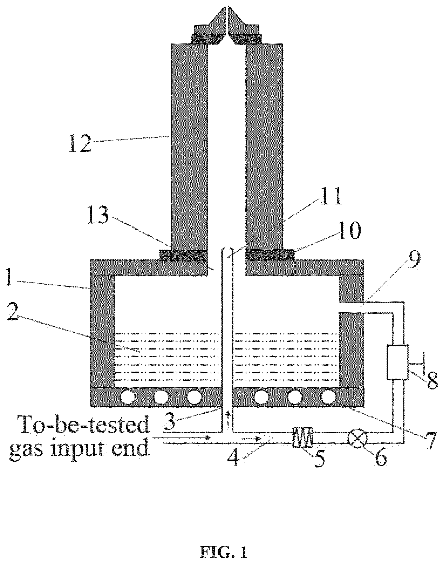

Referring to FIG. 1, a wide-temperature nanoparticle counter is provided by this embodiment, the wide-temperature nanoparticle counter includes a gas intake flow-dividing structure, a saturator, a condenser 12, and an optical counter. The saturator communicates with the condenser 12, the condenser 12 communicates with the optical counter, and the saturator, the condenser 12 and the optical counter are all provided with temperature control units for regulating and controlling the temperature of the saturator, the condenser 12 and the optical counter. The temperature of the saturator is higher than that of the condenser, and a liquid working substance with a thermal diffusivity greater than a mass diffusivity is stored in the saturator. A to-be-tested gas is divided into two paths after entering from a to-be-tested gas input end, one path of gas enters the saturator after being filtered in a pretreatment pipeline 4, and enters the condenser 12 while carrying working substance steam in the saturator, the other path of gas enters the condenser 12 from the center of the bottom of the condenser 12 through a to-be-tested gas conveying pipeline 11, and is mixed with the working substance steam in the condenser 12. When an operating temperature of the saturator is lower than a predetermined temperature threshold, the working substance is selected from alcohols. When the operating temperature of the saturator is higher than the predetermined temperature threshold, the working substance is selected from silicone oil, esters, or a solution formed by mixing at least two of the silicone oil, esters and alcohols. In this embodiment, the temperature threshold may be set to 50°C. The nanoparticle counter provided by this embodiment can work at both room temperature and high temperature by employing different liquid working substances and combined with the corresponding temperature control of the saturator and the condenser, thus achieving effective measurement of the number concentration of nanoparticles in a wide-temperature range.

Certain fine particle counting devices in the prior art are unable to select an appropriate measurement temperature according to the temperature of the to-be-tested gas due to their restricted operating temperature range. For example, some fine particle counting devices with an operating temperature of room temperature, when designed to measure the high-temperature to-be-tested gas, fail to effectively condense the high-temperature to-be-tested gas during the condensation due to the excessive temperature of the to-be-tested gas and the limitation of the working substance, leading to inaccurate measurement results. In contrast, the wide-temperature nanoparticle counter provided by this disclosure can select an appropriate liquid working substance and measurement temperature according to the temperature of the to-be-tested gas, and can achieve effective condensation and particle condensation growth in the condensation process, and thus achieving effective metering of fine particles.

In the condenser 12, working substance steam molecules carried in a sheath gas output from the pretreatment pipeline 4 (i.e., the filtered to-be-tested gas in the pretreatment pipeline) are condensed on a particle surface of the to-be-tested gas output from the to-be-tested gas conveying pipeline 11, which making the particle size continuously increased. The grown particles enter the optical counter, and then the number of particles can be metered by the optical counter.

In an example, in order to prevent the aerosol particles from being output from the condenser 12 in clusters, or in other words, in order to output the aerosol particles from the condenser 12 one by one as much as possible, an output port of the condenser 12 is set as a millimeter-level or sub-millimeter-level necking.

In this embodiment, given that the number concentration of generated aerosol particles is too high in some scenes (such as combustion), in order to count the high-concentration particles well, the wide-temperature nanoparticle counter in this embodiment is equipped with an aerosol particulate matter dilution system for diluting the to-be-tested gas entering the saturator in a certain proportion. The to-be-tested gas can only enter the saturator after being diluted by the aerosol particulate matter dilution system.

The optical counter, the saturator and the aerosol particulate matter dilution system will be introduced in detail later.

On the basis of the above contents, in order to avoid the mutual temperature influence of components in the wide-temperature nanoparticle counter, such as, damage of the optical counter caused by the high temperature of the condenser, a thermal insulation panel is arranged at a joint of the members. For example, thermal insulation material with thermal conductivity less than 1 W/(m K) is installed between the saturator and the condenser, as well as between the condenser and the optical counter. In practical application, the thermal insulation material is placed outside the joint of the connected members, and the thermal insulation panel with thermal conductivity less than 1 W/(m·K) is made of material with extremely low thermal conductivity. In order to effectively control the temperature in the saturator and the condenser, a first temperature sensor is arranged in the saturator, and a second temperature sensor is arranged in the condenser.

To ensure sufficient energy for each gas path, i.e., to provide power for a whole motion process of the to-be-tested gas from the gas intake flow-dividing structure to the optical counter, a pump is arranged at an end of the optical counter, that is, a gas outlet pipe is connected to an outlet of the optical counter, and the pump is arranged at an end of the gas outlet pipe. To facilitate flow rate calibration, an orifice is formed in the gas outlet pipe, positioned ahead of the pump, to control the flow rate as closely as possible to a critical flow rate of the orifice. To mitigate environmental pollution, an efficient filter is installed on the gas outlet pipe. For more precise regulation of the appropriate total flow rate, a rotameter is positioned at the rear end of the efficient filter to adjust an opening of the rotameter, thereby controlling the total sampling flow rate, and thus achieving accurate measurement of the total sampling flow rate. Simultaneously, in conjunction with the flow rate measured on the pretreatment pipeline, the number concentration of the particles can be accurately calculated by dividing the total particle number measured finally by the difference between the two flow rates.

In order to reduce heat loss due to radiation and ensure the temperature uniformity of saturator and condenser as much as possible, a surface of each of the saturator and condenser is wrapped with a thermal insulation material such as asbestos.

The optical counter, the saturator and the aerosol particulate matter dilution system are introduced in detail below.

### Embodiment 2

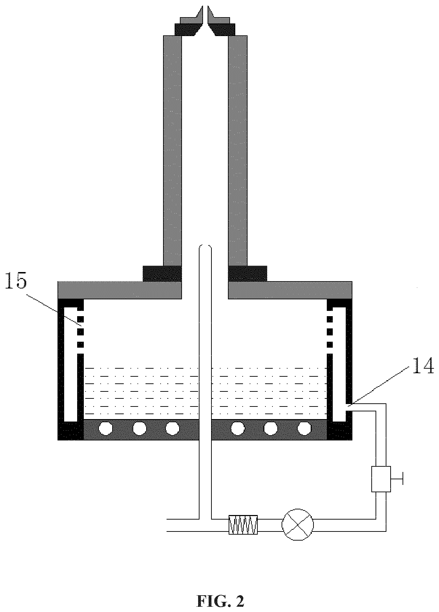

As shown in FIG. 1 and FIG. 2, the saturator includes a saturator chamber body 1, a temperature control unit, and a working substance 2. The working substance 2 is loaded at the bottom of an inner side of the saturator chamber body 1, the working substance 2 is selected from a group consisting of alcohols, esters, silicone oil, and a solution formed by mixing at least two of the esters, silicone oil, and alcohols. The temperature control unit includes a heating component 7 and a temperature control module (not shown) for regulating temperature of the heating component 7. A mounting groove (not shown) is formed in the bottom of an outer side of the saturator chamber body 1, and the heating component 7 is arranged in the mounting groove. A side wall of the saturator chamber body 1 is provided with a gas intake channel 9, and a height of an opening of the gas intake channel 9 at an inner side wall of the saturator chamber body 1 is higher than that of a working substance liquid level. The top of the saturator chamber body 1 is provided with a gas outlet channel 13, and the gas outlet channel 13 communicates with a gas inlet of the condenser 12 in the wide-temperature nanoparticle counter. The pretreatment pipeline 4 is provided with a particle filter 5, a flowmeter 6, and a flow control module 8 (the flow control module 8 is configured to regulate a flow rate of the gas flowing into the saturator, the particle filter 5 is configured to remove particulate matters from the gas in the pretreatment pipeline 4, and the flowmeter 6 is configured to measure the flow rate of the gas in the pretreatment pipeline 4). An outlet end of the pretreatment pipeline 4 communicates with the gas intake channel 9. Under the heating of the heating component 7, the working substance 2 is vaporized, and the working substance steam rises to an upper part of the inner side of the saturation chamber body 1. A sheath gas entering the saturation chamber body 1 through the pretreatment pipeline 4 and the gas intake channel 9 flows out from the gas outlet channel 13 while carrying the working substance steam, and into the condenser 12 of the wide-temperature nanoparticle counter.

In this embodiment, as the working substance 2 is selected from a group consisting of alcohols, esters, silicone oil, and a solution formed by mixing at least two of the esters, silicone oil, and alcohols, an appropriate working substance composition can be selected according to the temperature of the to-be-tested gas. For example, when the temperature of the to-be-tested gas ranges from 10°C to 50°C, alcohols may be selected as the working substance, a heating temperature of the heating component is controlled at about 40°C, and a corresponding temperature of the condenser is controlled at about 20°C. When the temperature of the to-be-tested gas ranges from 50°C to 200°C, the working substance may be selected from a group consisting of silicone oil, esters, and a solution formed by mixing at least two of the silicone oil, esters, and alcohols, the heating temperature of the heating component is controlled at about 200°C-250°C, and the corresponding temperature of the condenser is controlled at about 150°C-200°C. The specific temperature should be adjusted according to the selected liquid working substance. That is, for the to-be-tested gas at different temperatures, different working substances can be selected to cooperate with the appropriate operating temperature (i.e., the temperature of the saturator and the temperature of the condenser) of the working substance, so as to achieve the better condensation growth of the particles in the to-be-tested gas at a condensation stage. According to the present disclosure, the temperature control of the saturator is achieved by using the heating component 7 and the heating component temperature control module. The heating component 7 vaporizes the working substance, and the vaporized working substance is carried by the sheath gas into the condenser. Compared with the prior art that the sheath gas is introduced into a porous structure soaked with an organic working substance to achieve the carrying of the organic working substance by the sheath gas, the vaporized organic working substance is easier to be taken away by the sheath gas, that is, the sheath gas can take away more working substance steam, and the effect of carrying the organic working substance by the sheath gas can be achieved better.

In an example, the gas intake channel 9 may be as shown in FIG. 1. A semipermeable membrane material is attached to an opening, at the inner side wall of the saturation chamber body 1, of the gas intake channel 9. The semipermeable membrane material is permeable to gas but impermeable to liquid, and may be made of breathable and waterproof cloth, such as Sympatex, so as to prevent the working substance from flowing out of the saturator due to vibration, bumps and other reasons.

In another example, referring to FIG. 2, in order to make the sheath gas more fully contact with the working substance steam at the inner upper part of the saturation chamber body 1, a side wall of the saturation chamber body 1 can be arranged as a hollow wall with hollow inside, the bottom of the outer side wall of the hollow wall is provided with a first channel 14, and an upper part of an inner side wall of the hollow wall is provided with multiple second channels 15, and the first channel 14, the second channels 15 and an inner cavity of the hollow wall together form the gas intake channel of the saturator. The height of the second channel 15 is higher than that of liquid level of the working substance. The sheath gas enters the upper part of the hollow wall from the bottom of the hollow wall, and enters the saturation chamber body 1 from multiple second channels 15 at the periphery of the upper part of the inner side of the hollow wall, i.e., the sheath gas can enter the saturation chamber body 1 from the periphery of the upper part of the saturator chamber body 1, and then is mixed with the working substance steam at the upper part of the interior of the saturator chamber body 1 to achieve more full contact with the working substance steam. Further, a semipermeable membrane material is attached to the second channel 15. The semipermeable membrane material may be permeable to gas but impermeable to liquid, and may be made of breathable and waterproof cloth, such as Sympatex, so as to prevent the working substance from flowing out of the saturation chamber body 1 due to vibration, bumps and other reasons.

In this embodiment, the heating component 7 is preferably a heating rod.

In this embodiment, the bottom of the saturation chamber body 1 is provided with a pipeline channel 3 for the to-be-tested gas conveying pipeline 11 to pass through, and an outer wall of the to-be-tested gas conveying pipeline 11 is hermetically connected to a bottom surface of the saturation chamber body. A capillary at an end of the to-be-tested gas conveying pipeline 11 is configured to convey the to-be-tested gas to an inlet of the condenser 12.

In this embodiment, a gas flow entering from the to-be-tested gas inlet end of the wide-temperature nanoparticle counter is divided to the to-be-tested gas conveying pipeline 11 and the pretreatment pipeline 4.

In this embodiment, the saturator further includes an insulation panel 10 arranged between the saturation chamber body 1 and the condenser 12 in the wide-temperature nanoparticle counter, so as to prevent the high temperature of the saturator from being transferred to the condenser 12.

In this embodiment, to prevent the working substance from flowing out the saturator and enter the condenser due to vibration, bumps and other reasons during use while ensuring the passage of the working substance, a semipermeable membrane material is affixed to a gas path interface between the saturator and the condenser, The semipermeable membrane material, which may be permeable to gas but impermeable to liquid, could be composed of breathable and waterproof cloth, such as Sympatex.

In the condenser 12, the working substance steam carried in the sheath gas is condensed on the surface of the particles in the to-be-tested gas, making the particle size continuously increased. The grown particles enter the optical counter, and the number of particles is metered by the optical counter.

### Embodiment 3

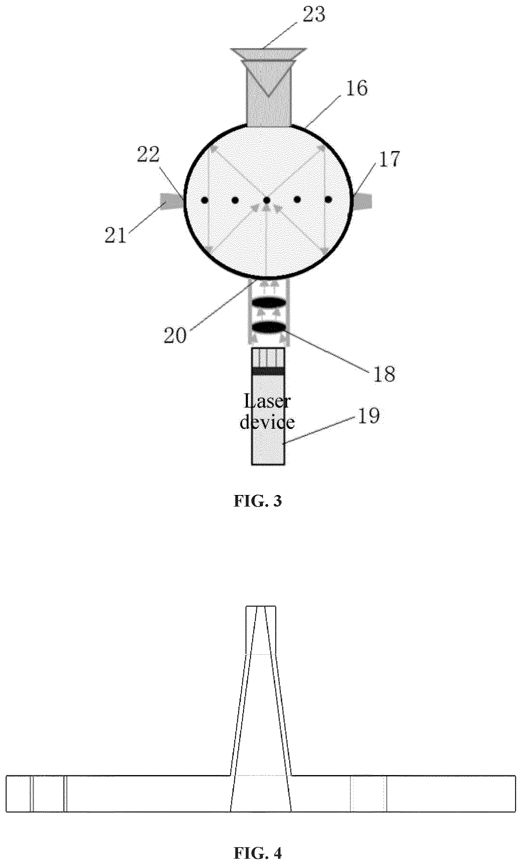

As shown in FIG. 3, the optical counter includes: a scattered light collecting device, an aerosol particle collimating structure, and a laser device. The scattered light collecting device is preferably an integrating sphere 16. The integrating sphere 16 is equipped with an aerosol particle inlet 22, an aerosol particle outlet 17, and a laser irradiation inlet 20. The aerosol particle collimating structure is configured to linearly convey all aerosol particles running into the integrating sphere 16 from the aerosol particle inlet 22 to the aerosol particle outlet 17, and discharge the aerosol particles from the aerosol particle outlet 17, thus avoiding a phenomenon, such as that multiple aerosol particles trapped in the integrating sphere 16 cannot be discharged. The laser emitted by the laser device 19 enters the integrating sphere 16 via the laser irradiation inlet 20. A laser path intersects with a motion path of the aerosol particles, and the laser irradiates on the aerosol particles at the intersection.

The above aerosol particle collimating structure may be achieved using the following ways:

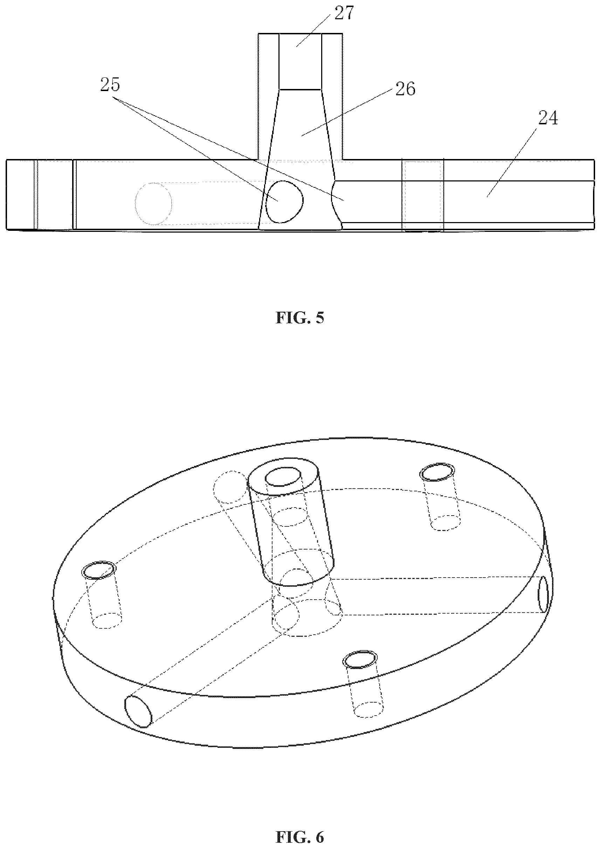

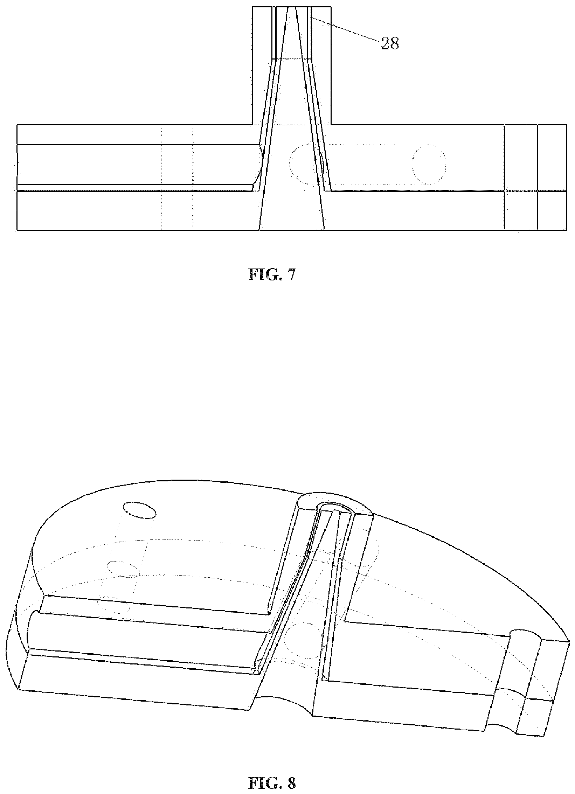

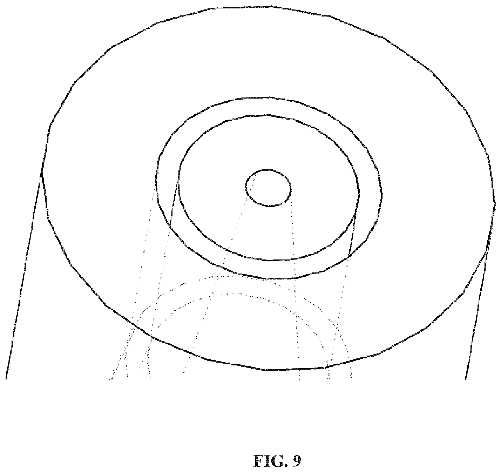

Way 1. Referring to FIG. 3 and FIG. 4, the optical counter further includes an aerosol particle inlet nozzle 21 (i.e., the aforementioned necking). Referring to FIG. 4 to FIG. 9, the aerosol particle collimating structure includes an annular sheath gas nozzle sleeved outside the aerosol particle inlet nozzle 21, and the annular sheath gas nozzle includes a nozzle part, and a pipeline part.

Specifically, the nozzle part includes a nozzle cavity 26. A nozzle cavity outlet 27 is connected to the aerosol particle inlet 22, and an annular gap 28 is established between the nozzle cavity 26 and an outer wall of the aerosol particle inlet nozzle 21. The cross-section of the annular gap 28 at an outlet of the aerosol particle inlet nozzle 21 is symmetrical with respect to the center of the cross section of the outlet of the aerosol particle inlet nozzle 21, and a gas flow ejected from the annular gap 28 converges on a straight line from the aerosol particle inlet 22 to the aerosol particle outlet 17, so as to linearly blow the aerosol particles entering from the aerosol particle inlet 22 of the integrating sphere 16 to the aerosol particle outlet 17 of the integrating sphere 16.

The pipeline part includes multiple gas flow pipelines 24, which are connected to gas flow inlets 25 uniformly formed in a side wall of the nozzle cavity, and configured to convey the gas flow to the annular gap 28.

Way 2. A connecting line between the aerosol particle inlet 22 and the aerosol particle outlet 17 is a straight line. The aerosol particle collimating structure includes multiple gas flow inlets 29 formed in a wall of the integrating sphere surrounding the aerosol particle inlet 22. The gas flow inlets 29 are uniformly arranged on a circumference with an intersection of the straight line and the wall of the integrating sphere as its center, and the gas flow inlets 29 are configured to blow gas symmetrically to the straight line.

Specifically, pure auxiliary gas flow inlets are symmetrical. Two or three collimated pure gas flows, with a flow velocity close to that of the aerosol particle inlet 22, are introduced as a protective sheath gas of the aerosol particles, so that an aerosol particle flow path is kept collimating under the entrainment of a protective sheath gas flow, and the aerosol particles entering from the aerosol particle inlet 22 of the integrating sphere 16 linearly flow to the aerosol particle outlet 17 of the integrating sphere 16.

The optical counter in this embodiment further includes a gas flow conveying pipeline. The gas flow conveying pipeline is affixed to the gas flow inlet 29 of the integrating sphere 16 and communicates with the gas flow inlet 29. The gas flow within the gas flow conveying pipeline blows a collimating gas flow into the integrating sphere 16 via the gas flow inlet 29.

As the temperature of the pure gas flow is lower than that of an aerosol particle passage, when the heat is transferred from the aerosol particle passage to the pure gas flow, the heat is taken away by the pure gas flow being flowing, thereby achieving the temperature isolation between a high-temperature aerosol particle heat source and other components. Upon completion of the operation, a gas flow switch may also be turned on for scavenging and cleaning after work, thereby taking the particles left in an aerosol particle passage protection device out of the wide-temperature nanoparticle counter.

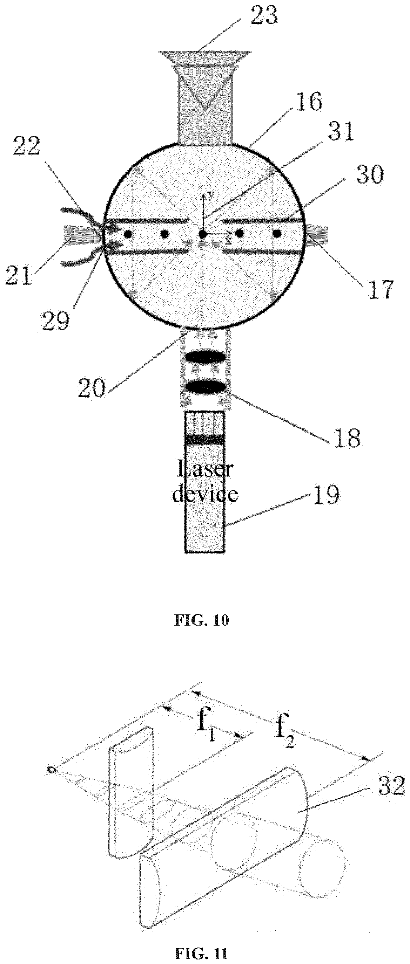

Way 3. As shown in FIG. 10, the aerosol particle collimating structure includes an aerosol particle protection passage, which includes a transparent hollow straight tube 30. A first port of the hollow straight tube 30 is affixed to the aerosol particle inlet 22 of the integrating sphere 16 and communicates with the aerosol particle inlet 22; and a second port of the hollow straight tube 30 is affixed to the aerosol particle outlet 17 of the integrating sphere 16 and communicates with the aerosol particle outlet 17. The hollow straight tube 30 is provided with a through hole 31, the laser emitted by the laser device 19 enters the integrating sphere 16 via the laser irradiation inlet 20, and irradiates on the through hole 31 on the hollow straight tube 31.

The aerosol particles, after entering the hollow straight tube 30, move along the hollow straight tube 30 until the aerosol particles are discharged from the aerosol particle outlet 17. As the hollow straight tube is linear, the linearity of the gas flow passage flowing through the hollow straight tube is ensured, and the phenomena that multiple aerosol particles trapped at the aerosol particle outlet 17 cannot be discharged and circulate are avoided.

Preferably, the hollow straight tube 30 may be made of a thermal insulation material to separate the high-temperature aerosol particle passage from a photosensitive cavity housing and a precision photoelectric device, thereby achieving separation of heat and electricity.

It should be noted that the aerosol particle collimating structure introduced in Way 3 and Way 1 can be employed concurrently for collimation of aerosol particles. Alternatively, the aerosol particle collimating structure introduced in Way 3 and Way 2 can be employed in tandem for the collimation of aerosol particles.

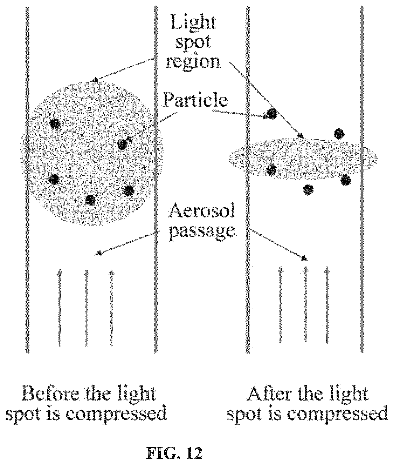

As an implementation of this embodiment, a lens assembly 18 is added in front of the laser device 19 to compress the cross-section of a laser light source during optical counting. This is done to ensure, as much as possible, that only one particle is present in a cross-section of a laser spot at any given time, i.e., only one particle is irradiated by the laser simultaneously. As shown in FIG. 11, the lens assembly 18 may include two cylindrical lens 32 with axes perpendicular to each other. Each cylindrical lens 32 has one flat surface and one convex surface, with the convex surface facing the laser device. After passing through the lens assembly 18, the cross section of the laser transitions from a circle to an ellipse. When the area is reduced to one third of the original area, it ensures that fewer particles appear on the cross section simultaneously. Referring to FIG. 12, before the light spot is compressed, there are five to six particles for scattering laser at the same time, and the scattered light, after being received by a photoelectric receiver, is mistaken for being emitted by one particle. After the light spot is compressed, it can be seen that there is only one particle in the cross section of the laser, which can ensure the one-to-one correspondence between each scattered optical pulse signal and each passing individual particle.

The aerosol particles, when coming out from the saturator and entering the optical counter, may be clustered, or there may be two or more aerosol particles on a plane perpendicular to a gas flow direction at the same time. To ensure the aerosol particles enter the optical counter individually as much as possible, an inner diameter at the outlet of the aerosol particle inlet nozzle 21 can be restricted. Preferably, the inner diameter can be set to 0.6-0.9 mm.

According to the embodiment of the present disclosure, the aerosol particle protection passage and an auxiliary gas path are incorporated to ensure the linearity of the motion of the aerosol particles in the optical counter, and to facilitate the effective discharge of the aerosol particles. Furthermore, according to the embodiment of the present disclosure, a lens is also strategically positioned between the scattered light collecting device (integrating sphere) and the laser device to compress the cross section of the laser light source, thereby making that only one particle is irradiated by the laser at the same time, and thus ensuring the counting accuracy.

In an example, the optical counter further equipped with a signal processor. The signal processor includes a light intensity pulse counting module, which is configured to ascertain the number of the particles based on the number of the optical pulse signals emitted by the photoelectric sensor.

Specifically, the signal processor includes a particle size comparison statistics module, and an inversion particle size algorithm module. Given the variation in light intensities scattered by the different particle sizes, that is, there is a specific correlation between the light intensity scattered by the particle and the particle size of the particle. The particle size comparison counting module is configured to determine particle size of each particle compared with a reference optical pulse signal intensity, based on a correlation between light intensities of optical pulse signals and particle sizes. The inversion particle size algorithm module is configured to analyze a specific particle size distribution based on the optical pulse signal distribution, using an inversion algorithm.

Utilizing the particle size comparison statistics module and the inversion algorithm module described above, the particle size classification of aerosol particles and the counting of aerosol particles at each particle size level can be achieved. This provides a foundation for assessing potential hazards to humans and accurately reducing emissions.

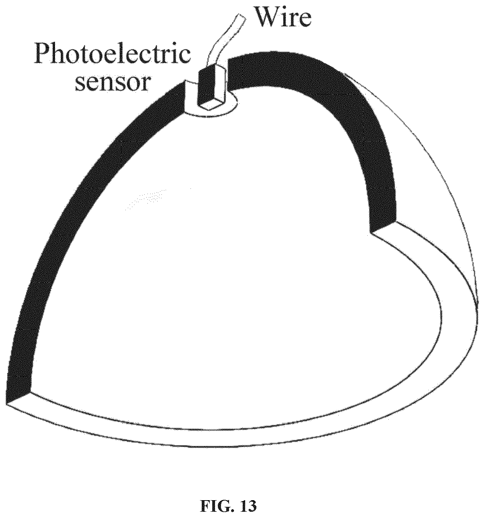

It should be noted that the photoelectric sensor mentioned above is mounted on the surface of the integrating sphere 16. The precise installation position is such that the center of the integrating sphere 16 serves as an origin, with the aerosol particle inlet 22 and the aerosol particle outlet 17 positioned on the x axis. The laser device 19 and a light trap 23 are situated on the y axis, while the photoelectric sensor is arranged on the z axis. A specific mode of installation involves creating a hole in the surface of the integrating sphere 16, and fitting the photoelectric sensor securely into the hole. For more details, please refer to FIG. 13.

### Embodiment 4

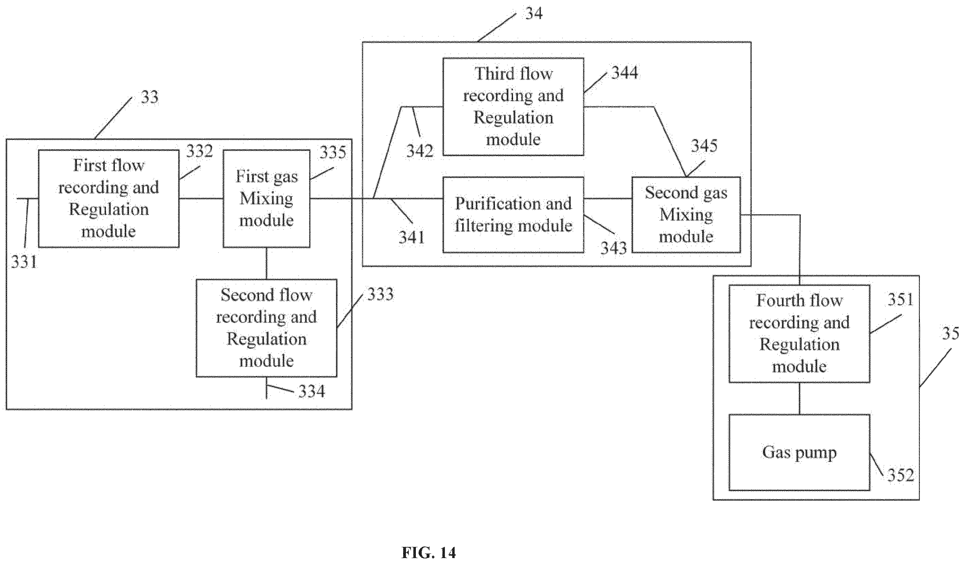

As shown in FIG. 14, the aerosol particulate matter dilution system comprises a primary dilution pipeline 33, and a secondary dilution pipeline 34. The primary dilution pipeline 33 includes a first input pipeline 331, a second input pipeline 334, and a first gas mixing module 335. The to-be-tested gas is introduced via the first input pipeline 331, while the pure gas is introduced via the second input pipeline 334. An output end of the first input pipeline 331 and an output end of the second input pipeline 334 both communicate with an input end of the first gas mixing module 335. The secondary dilution pipeline 34 includes a first branch 341, a second branch 342, and a second gas mixing module 345. A purification and filtering module 343 is installed on the first branch 341, an output end of the first branch 341 and an output end of the second branch 342 intersect at the second gas mixing module 345 and then communicate with an output end of the particulate matter dilution system. The primary dilution pipeline 33 achieves primary dilution of the to-be-tested gas by adding the pure gas to the to-be-tested gas, and the secondary dilution pipeline 34 further dilutes the to-be-tested gas by filtering and purifying a portion of the gas output from the primary dilution pipeline.

To adapt to the most appropriate concentration measurement range of the wide-temperature nanoparticle counter, a flow recording and regulation module for regulating the flow rate of the gas is installed in each of the primary dilution pipeline 33 and the secondary dilution pipeline 34, and controlling of the dilution concentration of the aerosol particulate matters can be realized by adjusting a ratio of the to-be-tested gas to the pure gas, and a ratio of the purified filtered gas to the unpurified filtered gas in the secondary dilution pipeline 34. Specifically, a first flow recording and regulation module 332 for regulating the flow rate of the to-be-tested gas and a second flow recording and regulation module 333 for regulating the flow rate of the pure gas are installed in the primary dilution pipeline 33. The first flow recording and regulation module 332 can be installed on a to-be-tested gas input pipeline, and the second flow recording and regulation module 333 can be installed on a pure gas input pipeline. A third flow recording and regulation module 344 for regulating the gas flow rate in the first branch 341 or the second branch 342 is installed in the secondary dilution pipeline 34, and the third flow recording and regulation module 344 is installed in the second branch 342 in FIG. 14.

The particulate matter dilution system further includes a pneumatic drive module 35. The pneumatic drive module 35 includes a gas pump 352, and a fourth flow recording and regulation module 351. The gas pump 352 is connected to an output end of the second gas mixing module via a gas pump pipeline. The fourth flow recording and regulation module 351 is installed on this gas pump pipeline.

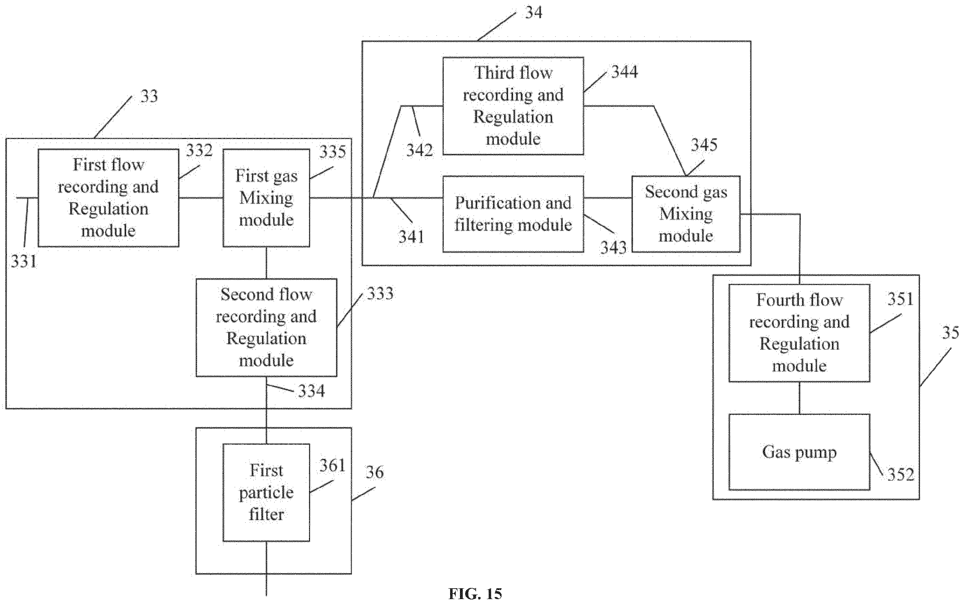

Referring to FIG. 15, as an implementation of the embodiment, the primary dilution pipeline 33 may also include a filter module 36. This filter module 36 includes a filtering pipeline and a first particle filter 361 installed within the filtering pipeline. An output end of the filtering pipeline is connected to the second input pipeline 334 of the primary dilution pipeline 33. Air is introduced through an input end of the filtering pipeline for filtering and purifying the air, thereby supplying the pure gas to the primary dilution pipeline 33.

As an implementation of the embodiment, the purification and filtering module 343 includes a volatile organic compound removal device, and a second particle filter.

As an implementation of the embodiment, in order to avoid the change of the number of particles caused by the collision of particles in high-temperature gases such as automobile tail gas as well as caused by the condensation of water vapor and volatile organic compounds in gas into droplets due to decrease in temperature, a heating module can be installed on the dilution pipeline, which is specifically as follows:

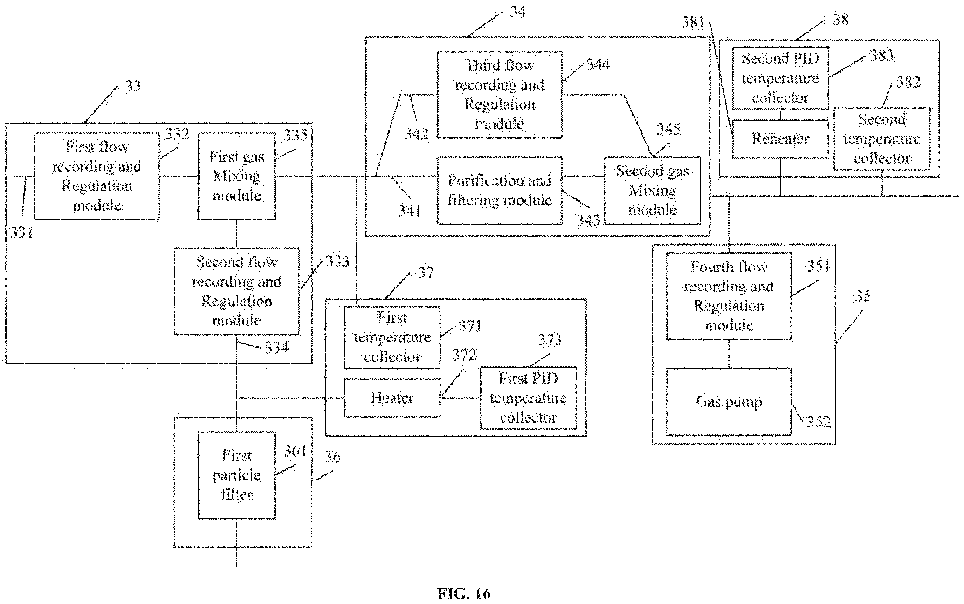

Referring to FIG. 16, a first temperature regulation module 37 is installed on the pure gas input pipeline within the primary dilution pipeline, which is configured to heat an external gas introduced into the dilution system, thereby preventing the temperature reduction of the gas in the dilution system due to the introduction of the external gas. In addition, a second temperature regulation module 38 may also be installed on an output pipeline of the secondary dilution system. In actual application, the first temperature regulation module 37 may include a heater 372, a first temperature collector 371, and a first PID temperature controller 373. The first PID temperature controller 373 is configured to control the heater 372 to heat the pure gas input pipeline based on the temperature of the gas after primary dilution measured by the first temperature collector 371. The second temperature regulation module 38 may include a reheater 381, a second temperature collector 382, and a second PID temperature controller 383. The second PID temperature controller 383 is configured to control the reheater 381 to heat the output pipeline of the second dilution pipeline based on the temperature in the output pipeline of the second dilution pipeline measured by the second temperature collector 382.

In this embodiment, the aerosol particulate matter dilution system further includes a terminal controller, which is configured to collect measurement data of the sensor in the aerosol particulate matter dilution system and transmit a control instruction to the regulation module, specifically, to collect the flow rate information recorded by the flow recording and regulation module and the temperature information detected by the temperature collector, transmit a flow rate regulation instruction to the flow recording and regulation module, and transmit a temperature control instruction to the PID temperature controller.

As an implementation of the embodiment, the secondary dilution system further includes a sampling pipeline communicating with an output end of the secondary dilution pipeline, a sampling filter membrane is placed in the sampling pipeline for sampling the to-be-tested gas.

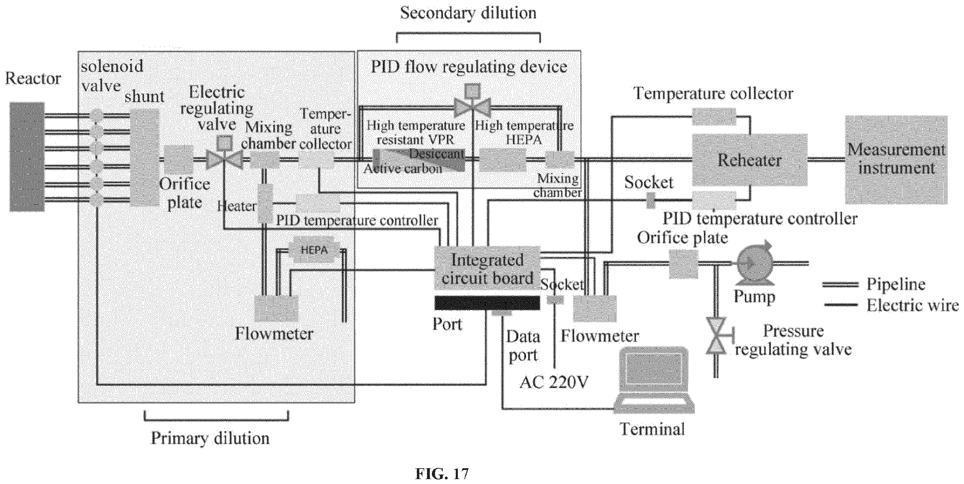

In an example, referring to FIG. 17, the to-be-tested gas is introduced into a first input end of the primary dilution pipeline flows through a solenoid valve, a shunt, an orifice plate, and an electric regulating valve, and the pure gas is introduced into a second input end of the primary dilution pipeline flows through a first HEPA (high efficiency particulate air filter), a first MFC (micro-function circuit) flow recording and regulation module and the heater, and the to-be-tested gas and the pure gas are mixed in a first gas mixing chamber. An input end of the secondary dilution pipeline communicates with an output end of the first gas mixing chamber in the primary dilution pipeline, the input end of the secondary dilution pipeline is divided into two branches. Gas in the first branch passes through the volatile organic compound removal device (VPR) and is purified and filtered by a second efficient high efficiency particle filter, and then is mixed with gas in the second branch at a second gas mixing chamber, and the second branch is equipped with a PID flow regulating device. The output end of the secondary dilution pipeline communicates with the reheater through two ports of a three-port valve, and a third port of the three-port valve communicates with the gas pump through a second MFC flow recording and regulation module and the orifice plate.

Various embodiments in this specification are described in a progressive way, and each embodiment focuses on the differences from other embodiments, so it is only necessary to refer to the same and similar parts between each embodiment.

Specific examples are used herein for illustration of the principles and implementation methods of the present disclosure. The description of the embodiments is merely used to help illustrate the method and its core principles of the present disclosure. In addition, a person of ordinary skill in the art can make various modifications in terms of specific embodiments and scope of application in accordance with the teachings of the present disclosure. In conclusion, the content of this specification shall not be construed as a limitation to the present disclosure.

## Claims

1. A wide-temperature nanoparticle counter, comprising a gas intake flow-dividing structure, a saturator, a condenser, and an optical counter, wherein the saturator, the condenser and the optical counter are in sequential connection with each other; each of the saturator, the condenser and the optical counter is provided with a temperature control unit, with the saturator maintained at a higher temperature than the condenser; a liquid working substance with a thermal diffusivity greater than a mass diffusivity is stored in the saturator; the gas intake flow-dividing structure comprises a pretreatment pipeline and a to-be-tested gas conveying pipeline; a to-be-tested gas bifurcates into two paths after entering from a to-be-tested gas input end of the wide-temperature nanoparticle counter, wherein one path of gas flows into the pretreatment pipeline, while the other path of gas flows into the to-be-tested gas conveying pipeline; the gas from the pre-treatment pipeline enters the saturator after being filtered and carries working substance steam into the condenser; the gas in the to-be-tested gas conveying pipeline enters the condenser from a center of a bottom of the condenser through a capillary or a microporous channel at an end of the to-be-tested gas conveying pipeline; if an operating temperature of the saturator falls below a predetermined temperature threshold, alcohols are chosen as a working substance; if the operating temperature of the saturator remains above the predetermined temperature threshold, the working substance is selected from silicone oil or esters, or a solution formed by mixing at least two of the silicone oil, esters and alcohols.

2. The wide-temperature nanoparticle counter according to claim 1, wherein the pretreatment pipeline is equipped with a flow control module, a particle filter, and a flowmeter ; the flow control module is configured to regulate a flow rate of the gas flowing into the saturator, the particle filter is configured to remove particulate matters in the gas in the pretreatment pipeline, the flowmeter is configured to measure a flow rate of the gas in the pretreatment pipeline; the gas output from the pretreatment pipeline, after entering the saturator, flows above the liquid working substance, and carries the working substance steam to enter the condenser from an output end of the saturator.

3. The wide-temperature nanoparticle counter according to claim 1, wherein the optical counter comprises: a scattered light collecting device, an aerosol particle collimating structure, and a laser device;
the scattered light collecting device is provided with an aerosol particle inlet, an aerosol particle outlet and a laser irradiation inlet;
the aerosol particle collimating structure is configured to linearly convey aerosol particles entering from the aerosol particle inlet to the aerosol particle outlet;
laser emitted by a laser device enters the scattered light collecting device via the laser irradiation inlet, and the laser irradiates on a motion path of the aerosol particles.

4. The wide-temperature nanoparticle counter according to claim 3, wherein the optical counter further comprises an aerosol particle inlet nozzle, the aerosol particle collimating structure includes an annular sheath gas nozzle, and the annular sheath gas nozzle includes a nozzle part and a pipeline part;
the nozzle part comprises a nozzle cavity, which has a nozzle cavity outlet connected to the aerosol particle inlet, and is sleeved outside the aerosol particle inlet nozzle with an annular gap formed between the nozzle cavity and an outer wall of the aerosol particle inlet nozzle; a cross section of the annular gap at an outlet of the aerosol particle inlet nozzle is symmetric about a center of the cross section of the outlet of the aerosol particle inlet nozzle, and a gas flow ejected from the annular gap converges on a straight line from the aerosol particle inlet to the aerosol particle outlet;
the pipeline part comprises a plurality of gas flow pipelines, which are connected to gas flow inlets uniformly formed in a side wall of the nozzle cavity

5. The wide-temperature nanoparticle counter according to claim 4, wherein an output port of the aerosol particle inlet nozzle is a millimeter-level or submillimeter-level necking.

6. The wide-temperature nanoparticle counter according to claim 3, wherein a connecting line between the aerosol particle inlet and the aerosol particle outlet is a straight line; the aerosol particle collimating structure comprises a plurality of gas flow inlets formed in a wall of the scattered light collecting device around the aerosol particle inlet; the gas flow inlets are uniformly arranged on a circumference with an intersection of the straight line and the scattered light collecting device as a center, and the gas flow inlets are configured to blow gas symmetrically to the straight line.

7. The wide-temperature nanoparticle counter according to any one of claims 3 to 6, wherein the aerosol particle collimating structure comprises an aerosol particle protection passage, the aerosol particle protection passage comprises a transparent hollow straight tube; a first port of the hollow straight tube is affixed to the aerosol particle inlet of the scattered light collecting device and communicates with the aerosol particle inlet; a second port of the hollow straight tube is affixed to the aerosol particle outlet of the scattered light collecting device and communicates with the aerosol particle outlet; the hollow straight tube is provided with a through hole; the laser emitted by the laser device enters the scattered light collecting device via the laser irradiation inlet and irradiates on the through hole on the hollow straight tube.

8. The wide-temperature nanoparticle counter according to claim 3, wherein the optical counter further comprises a lens assembly arranged between the scattered light collecting device and the laser device, the lens assembly is configured to compress a cross section of the laser emitted by the laser device; the lens assembly comprises two cylindrical lenses with mutually perpendicular axes, wherein each cylindrical lens has one flat surface and one convex surface, with the convex surface facing the laser device.

9. The wide-temperature nanoparticle counter according to claim 3, wherein the optical counter further comprises a processor, the processor comprises a light intensity pulse counting module, a particle size comparison counting module, and an inversion particle size algorithm module; the light intensity pulse counting module is configured to acquire an optical pulse signal output by a photoelectric sensor and count a light intensity distribution of the optical pulse signal, so as to obtain information of a number of particles; the particle size comparison counting module is configured to determine particle size of each particle with reference to a reference optical pulse signal intensity based on a correspondence between light intensities of optical pulse signals and particle sizes; and the inversion particle size algorithm module is configured to analyze a specific particle size distribution according to an inversion algorithm based on the optical pulse signal distribution.

10. The wide-temperature nanoparticle counter according to claim 1, wherein the wide-temperature nanoparticle counter further comprises a two-stage dilution system, with its output end connected to the to-be-tested gas input end; the two-stage dilution system comprises a primary dilution pipeline, and a secondary dilution pipeline.
the primary dilution pipeline comprises a first input pipeline, a second input pipeline, a first gas mixing module, a first flow recording and regulation module, and a second flow recording and regulation module; the first input pipeline communicates with the to-be-tested gas, while the second input pipeline communicates with a pure gas, and both an output end of the first input pipeline and an output end of the second input pipeline are connected to an input end of the first gas mixing module; the first flow recording and regulation module is configured to regulate a flow rate of the to-be-tested gas, and the second flow recording and regulation module is configured to regulate a flow rate of the pure gas;
the secondary dilution pipeline comprises a first branch, a second branch, a second gas mixing module, and a third flow recording and regulation module installed on the first branch or the second branch; a purification and filtering module is installed on the first branch, both an input end of the first branch and an input end of the second branch are connected to an output end of the first gas mixing module, both an output end of the first branch and an output end of the second branch are connected to an input end of the second gas mixing module, and an output end of the second gas mixing module is connected to an output end of a particulate matter dilution system.
